# EUROPEAN PATENT APPLICATION

(11) **EP 2 206 679 A1**
(43) Date of publication of application: **14.07.2010**
(21) Application number: 08305954.3
(22) Date of filing: 16.12.2008
(51) Int. Cl.: C01B 3/06, C08G 77/00

(54) **New process of production of hydrogen from silylated derivatives as hydrogen carrier**

(71) Applicant: Université de la Méditerranée - Aix-Marseille II, 13007 Marseille (FR); Centre National pour la Recherche Scientifique (CNRS), 75016 Paris (FR)
(72) Inventor: Brunel, Jean-Michel, 13012 MARSEILLE (FR)
(74) Representative: Jacobson, Claude

(57) **Abstract**

The present invention relates to a method for producing hydrogen (H₂) comprising the steps consisting in :
a) reacting a compound (C) comprising one or more groups Si-H with a fluoride ions source, thereby forming hydrogen and a by-product (C1) ; and
b) recovering the obtained hydrogen.

## Description

The invention relates to a process of production of hydrogen, notably from silylated derivatives as hydrogen carrier.

The ability to produce and store hydrogen efficiently, economically and safely, is one of the challenges to be overcome to make hydrogen an economic source of energy. There have been described the limitations in the current commercialization of fuel cells, and internal combustion engines fueled with hydrogen.

The hydrogen storage methodologies span many approaches, including high pressures and cryogenics, but usually focus on chemical compounds that reversibly release H₂ upon heating. Hydrogen storage is a topical goal in the development of a hydrogen economy. Most research into hydrogen storage is focused on storing hydrogen in a lightweight, compact manner for mobile applications. Hydrocarbons are stored extensively at the point of use, be it in the gasoline tanks of automobiles. Hydrogen, in comparison, is quite difficult to store or transport with current technology. Hydrogen gas has good energy density by weight, but poor energy density by volume versus hydrocarbons, hence it requires a larger tank to store. Increasing gas pressure would improve the energy density by volume, making for smaller, but not lighter container tanks. Thus, higher compression will mean more energy lost to the compression step.

Alternatively, metal hydrides, with varying degrees of efficiency, can be used as a storage medium for hydrogen. Some are easy-to-fuel liquids at ambient temperature and pressure, others are solids which could be turned into pellets. Proposed hydrides for use in a hydrogen economy include simple hydrides of magnesium or transition metals and complex metal hydrides, typically containing sodium, lithium, or calcium and aluminium or boron. These materials have good energy density by volume, although their energy density by weight is often worse than the leading hydrocarbon fuels. Furthermore, high temperatures are often required to release their hydrogen content. Solid hydride storage is a leading contender for automotive storage. A hydride tank is about three times larger and four times heavier than a gasoline tank holding the same energy. For a standard car, that's about 0.17 m³ of space and 270 kg versus 0.057 m³ and 70 kg. Lithium, the primary constituent by weight of a hydride storage vessel, currently costs over 90 $/kg. Any hydride will need to be recycled or recharged with hydrogen, either on board the automobile or at a recycling plant. A metal-oxide fuel cell, (i.e. zinc-air fuel cell or lithium-air fuel cell), may provide a better use for the added weight, than a hydrogen fuel cell with a metal hydride storage tank. Often hydrides react by combusting rather violently upon exposure to moist air, and are quite toxic to humans in contact with the skin or eyes, hence cumbersome to handle (see borane, lithium aluminum hydride). For this reason, such fuels, despite being proposed and vigorously researched by the space launch industry, have never been used in any actual launch vehicle. Few hydrides provide low reactivity (high safety) and high hydrogen storage densities (above 10% by weight). Leading candidates are sodium borohydride, lithium aluminum hydride and ammonia borane. Sodium borohydride and ammonia borane can be stored as a liquid when mixed with water, but must be stored at very high concentrations to produce desirable hydrogen densities, thus requiring complicated water recycling systems in a fuel cell. As a liquid, sodium borohydride provides the advantage of being able to react directly in a fuel cell, allowing the production of cheaper, more efficient and more powerful fuels cells that do not need platinum catalysts. Recycling sodium borohydride is energy expensive and would require recycling plants. More energy efficient means of recycling sodium borohydride are still experimental. Recycling ammonia borane by any means is still experimental. Hydrogen produced for metal hydride storage must be of a high purity. Contaminants alter the nascent hydride surface and prevent absorption. This limits contaminants to at most 10 ppm oxygen in the hydrogen stream, with carbon monoxide, hydrocarbons and water at very low levels. An alternative to hydrides is to use regular hydrocarbon fuels as the hydrogen carrier. Then a small hydrogen reformer would extract the hydrogen as needed by the fuel cell. However, these reformers are slow to react to changes in demand and add a large incremental cost to the vehicle powertrain. Direct methanol fuel cells do not require a reformer, but provide a lower energy density compared to conventional fuel cells, although this could be counter balanced with the much better energy densities of ethanol and methanol over hydrogen. Alcohol fuel is a renewable resource. Solid-oxide fuel cells can operate on light hydrocarbons such as propane and methane without a reformer, or can run on higher hydrocarbons with only partial reforming, but the high temperature and slow startup time of these fuel cells are problematic for automotive applications. Some other hydrogen carriers strategies including carbon nanotubes, metal-organic frameworks, doped polymers, glass microspheres, phosphonium borate, imidazolium ionic liquids, amine borane complexes have been investigated with moderate results. On the other hand, ammonia has been investigated as a potent hydrogen precursor. Thus, Ammonia (NH₃) releases H₂ in an appropriate catalytic reformer. Ammonia provides high hydrogen storage densities as a liquid with mild pressurization and cryogenic constraints: It can also be stored as a liquid at room temperature and pressure when mixed with water. Nevertheless, ammonia is a toxic gas at normal temperature and pressure and has a potent odor.

The patent application WO 2008/094840 discloses a method for producing hydrogen from hydrolysis of organosilane compounds in the presence of a catalyst mixture consisting of hydroxide and of an organic amine. However, some of the used organosilane compounds such as siloxene are expensive and quite toxic. Furthermore, such compounds often lead to the formation of not environment-friendly by-products of which recycling has not been completely envisionned and appears quite difficult and expensive. Another questionable point is the use of alkyl- or arylamines (well-known to be carcinogens in almost cases) as catalysts in important proportions and in numerous cases, in a stoichiometric amount.

There remains a need for further improvements in efficiency, performance, and cost effectiveness of such clean energy sources, for a variety of applications, such as portable and stationary fuels cells or emissions control system for motor vehicles. There remains a need for improvements which exhibit enhanced efficiency, performance and that are cost effective.

It now has been discovered a method for producing hydrogen in large amounts, with high yields, in a very short time and with very low production costs. More particularly, hydrogen may be advantageously produced in one step from unexpensive commercially available products. Further, this method can be easily scaled up.

Thus, in one aspect, the invention is directed to a method for producing hydrogen (H₂) comprising the steps consisting in :
a) reacting a compound (C) comprising one or more groups Si-H with a fluoride ions source, thereby forming hydrogen and a by-product (C1) ;
   and
b) recovering the obtained hydrogen.

Preferably, the compound (C) comprises at least two groups Si-H.

Preferably, the compound (C) comprises one or more monomer units of formula (A) : 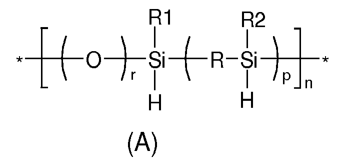 wherein :
R is a bond, C₁-C₆ alkylene, (C₁-C₄ alkylene)ₘ-Z-(C₁-C₄ alkylene)_{q} ;
Z is O, NR¹⁰, S(O)_{y}, CR¹⁰=CR¹⁰, C≡C, C₆-C₁₀ arylene, 5-10 membered heteroarylene, or C₃-C₆ cycloalkylene ;
R¹, R² are each independently selected from H, halogen, C₁-C₁₀ alkyl, C₃-C₁₀ cycloalkyl, C₆-C₁₂ aryl, aralkyl, 5 to 10-membered heteroaryl, OR³, NR⁴R⁵, SiR⁶R⁷R⁸, wherein said aryl groups are optionally substituted by one to three R⁹ groups ;
R³ is H, C₁-C₆ alkyl, C₆-C₁₀ aryl, aralkyl ;
R⁴, R⁵ are each independently selected from H, C₁-C₆ alkyl, C₆-C₁₀ aryl, aralkyl ;
R⁶, R⁷, R⁸ are each independently selected from H, OR³, C₁-C₆ alkyl, C₆-C₁₀ aryl, aralkyl ;
R⁹ is selected from halogen, C₁-C₁₀ alkyl, OR¹⁰, NO₂, NR¹¹R¹², CN, C(=O)R¹⁰, C(=O)OR¹⁰, S(=O)CH₃, wherein said alkyl group is optionally substituted by one or more halogen ;
R¹⁰ is H or C₁-C₃ alkyl ;
R¹¹, R¹² are each independently selected from H, or C₁-C₁₀ alkyl;
m, q are 0 or 1 ;
y is 0, 1 or 2 ;
n, p are intengers each representing the number of repeating units, with
   n being superior or equal than 1, and
   p being 0 or 1 ;
   r is 0 or 1 provided that p + r is 0 or 1 ;

In a preferred embodiment, p is 0.

In a certain aspect, r is 1.

In a preferred aspect of the invention, there are included a method comprising reacting compounds (C) comprising one or more monomer unit of formula (Ia) :

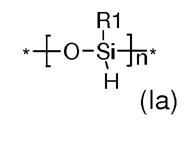

Preferably, the monomer unit is a compound of formula (Ia) wherein R¹ is H or C₁-C₆ alkyl and R² is H. More preferably, R¹ is methyl or H and R² is H.
Preferably, the compound (C) is polymethylhydrosiloxane (PMHS). This compound indeed offers many advantages. This by-product of the silicone industry is a cheap, easy to handle, and environmentally friendly reducing agent. Further, PMHS is more air and moisture stable than other silanes and can be stored for long periods of time without loss of activity. Finally, PHMS has revealed to be an hydrogen carrier with a high hydrogen storage density.
Preferably, the compound (C) comprises 2 to 1000 monomer units of formula (Ia), more preferably from 2 to 100. As an example, PHMS available from Sigma-Aldrich company (References 81330 and 176206) having an average molecular weight ranging from 240-3200 g mol⁻¹ (corresponding to 4 - 53 monomer units) may be used.

In an additional aspect of the present invention, r is 0.

In another preferred aspect, p is 0.

In a preferred aspect of the invention, the compound (C) comprises one or more monomer unit of formula (Ib) :

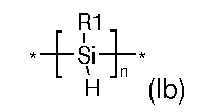

Preferably, the compound comprising a monomer unit of formula (Ib) is phenylsilane (PhSiH₃), or N,N-diethyl-1,1-dimethylsilylamine ((Et)₂N-SiH(CH₃)₂), phenylsilane being particularly preferred.

In a still further preferred embodiment, p is 1.

Preferably, r is 0.

Preferably, R is a bond or C₁-C₆ alkylene, notably -CH₂-CH₂-. Alternatively, R is Z, with Z being O or NR¹⁰, notably NH.

Preferably, the monomer unit is of formula (Ic) :

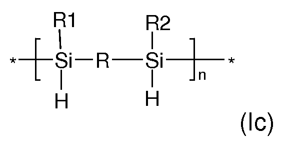

Preferably, the compound (C) comprising a monomer unit of formula (Ic) is tetramethyldisiloxane ((CH₃)₂HSi-O-SiH(CH₃)₂), 1,1,3,3-tetramethyldisilazane ((CH₃)₂HSi-NH-SiH(CH₃)₂), 1,4-disilabutane (H₃Si(CH₂)₂SiH₃), or tetramethyldisilane ((CH₃)₂HSi-SiH(CH₃)₂), 1,4-disilabutane being particularly preferred.

Phenylsilane and disilabutane are advantageously commercially available, easy to handle, stable to air and moisture, and can be stored for long periods of time without loss of activity. Finally, phenylsilane and 1,4-disilabutane have both revealed to be hydrogen carriers with a high hydrogen storage density.

Preferably, the fluoride ions source is a fluoride salt selected from alkaline or alkaline earth metal salts, or ammonium, tetraalkylammonium, tetraarylammonium salts, tetraarylammonium and tetraalkylammonium salts being particularly preferred. Indeed, it has been observed that higher amounts hydrogen are produced with the latter.
As examples of alkaline or alkaline earth metal salts, mention may be made of sodium fluoride, potassium fluoride, lithium fluoride, and calcium fluoride.
As examples of tetraalkylammonium or tetraarylammonium salts, mention may be made notably of ammonium fluoride (H₄NF), tetrabutylammonium fluoride (Bu₄NF) or tetraphenylammonium fluoride.
The molar ratio of fluoride ions source relative to the compound may vary widely and may range notably from 0.001 to 2 equivalents. Preferably, catalytic amounts of fluoride ions source are used, *i.e*. the molar ratio is inferior to 1 and most preferably ranges from 0.005 to 0.04.
In the method according to the invention, in step a), the reaction is preferably performed in a solvent, more preferably in a polar solvent, including water, organic polar solvents or a mixture thereof.
By way of illustration and without limitation of organic polar solvents which may be suitable for the method according to the invention, there may be mentioned in particular alcohols, polyols, ketones and ethers.
As examples of alcohols, there may be mentioned methanol and ethanol.
As examples of polyols, there may be mentioned ethylene glycol and glycerol.
As examples of ketones, there may be mentioned acetone.
Among the ethereal solvents, diethyl ether, tetrahydrofuran and dioxane may be cited.
Advantageously, the reaction is performed in a solvent, notably in an alcohol, which may be present in a stoechiometric amount relative to that of the compound (C).
In some embodiments, it may be advantageous to perform the reaction in a mixture of an organic polar solvent and of water, notably in alcohol/water. Indeed, it has been observed that the presence of water, even in a small volume ratio, for example of 10% of water relative to the total volume of solvent, allow to slow down the kinetic of the reaction and hence the production of hydrogen.
The temperature of the reaction in step a) of the method according to the invention may vary in a wide range, and may range notably from 0 to 200 °C. More preferably, the temperature ranges from 15 to 30 °C and is most preferably of about 20°C.
The hydrogen obtained by the method of the invention is recovered, either for storage or for use to produce energy.

In a particular embodiment, the method of the invention further comprises a step c) of recycling the obtained by-product (C1).
When the polysiloxane PHMS is used as starting material, the recycling may be performed by hydrolysis under basic conditions, optionally followed by neutralization with an acid solution. When an alcohol is used as a solvent, the recycling step may lead to the regeneration of the solvent used, such as methanol or ethanol.
The basic hydrolysis may be performed by contacting the obtained by-product with an aqueous basic solution, notably of pH ranging from 10 to 13, This hydrolysis may be performed with a concentrated strong base, such as an alkaline solution, as an example a 5 to 30 % NaOH or KOH aqueous solution.
The neutralization with an acid solution may be performed typically by adding a strong acid, for example a 5 to 35 % of HCl aqueous solution.
This recycling step is illustrated by the following scheme :

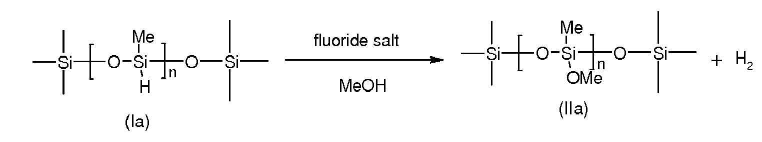

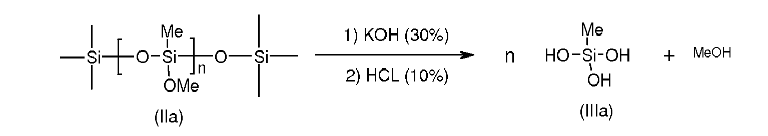

The hydrolyzed silylated derivative ((CH₃)Si(OH)₃) (IIIa) can be advantageously used for the synthesis of various silicon derivatives such as plastics, semiconductors, as described notably in US patent number 3,435,001.

When a silane compound is used as a starting material (C) in step a) in an alcohol, the recycling step of the obtained by-product (C1) may be performed by reacting said by-product with a metal hydride, thereby regenerating said starting silane compound.
As examples of metal hydrides, there may be mentioned aluminum metal hydrides such as LiAlH₄.
This recycling step is generally performed at room temperature, notably between 15-25°C. Preferably, anhydrous conditions are used to prevent the by-product (C1) of polymerizing.
This recycling step is illustrated in the following schemes :
- with PhSiH₃ : 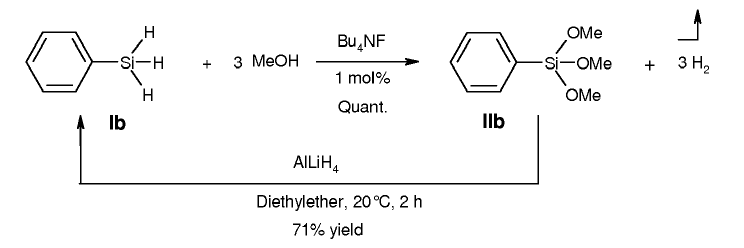
- with H₃Si(CH₂)₂SiH₃.

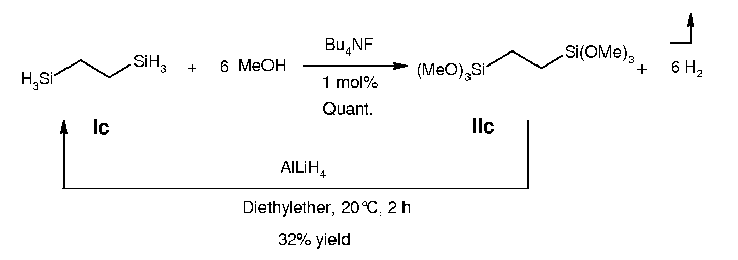

As shown in the above schemes, the recycling step of compounds (C1) of formula (IIb) and (IIc) may be performed in good yields by treatment with lithium aluminum hydride at room temperature (typically 20°C), thus leading to the regeneration of the solvent used (typically methanol) and the starting silane compound. These recycling steps are generally performed in a solvent, notably in an aprotic polar solvent, such as an ether. For more information regarding such treatments, reference could be made to the following publications: Boudin, A.; Cerveau, G.; Chuit, C.; Corriu, R. J. P. ; Reye, C. Bull. Chem. Soc. Jpn. 1988, 61, 101-106 ; and Minge, O.; Mitzel, N. W.; Schmidbaur, H. Organometallics 2002, 21, 680-684.

According to a preferred embodiment, steps a) and b) of the method as defined above are repeated with the regenerated compound (C).

As a further aspect, the invention also concerns a device suitable for the implementation of a method for producing hydrogen as defined above.

In an additionnal aspect, the invention relates to a by-product (C1) of formula (IIa) or (IIa') :

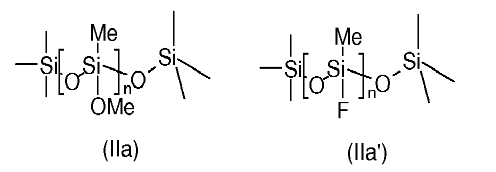

These by-products ((IIa) and (IIa')), which are obtained by reaction of PHMS with a fluoride ions source in the presence or in the absence of methanol as solvent respectively, are particularly interesting as they can valuably be recycled into MeSi(OH)₃ which is a known starting material in plastic chemistry as mentioned above.

Thus, in a further aspect, the invention relates to a method of recycling the by-product (C1) obtained from PHMS according to the method described hereabove, including the compounds (IIa) or (IIa'), into CH₃Si(OH)₃ or a salt thereof, comprising contacting said by-product (C1) with a basic solution, and optionally neutralizing the obtained product.

In a still further aspect, the invention relates to a method of recycling the by-product (C1) obtained from PhSiH₃ in alcohol, according to the method described hereabove, into PhSiH₃, comprising contacting said by-product (C1) with a metal hydride.

In a still further aspect, the invention relates to a method of recycling the by-product (C1) obtained from H₃Si(CH₂)₂SiH₃ in alcohol according to the method described hereabove into H₃Si(CH₂)₂SiH₃, comprising contacting said by-product (C1) with a metal hydride.

More generally, the invention relates to a method comprising :
i) producing hydrogen from a compound (C) ; and
ii) recycling the obtained by-product (C1) of step i).

In an additional aspect, the invention is directed to a composition, notably for producing hydrogen, comprising a compound (C) and a fluoride ions source as defined above.
Preferably, the composition further comprises an alcohol solvent.

Particularly preferred compositions are those comprising PHMS, phenylsilane or 1,4-disilabutane in combination with tetraalkyammonium fluoride and methanol.

In yet another aspect, the invention relates to the use of compound (C) in the presence of a fluoride ion source or of the composition according to the invention as defined above, for producing hydrogen, notably *in situ* or on an as needed basis.
In particular, the compositions, or compound (C) in the presence of a fluoride ions source may be used as a fuel, a propellant or a precursor thereof. As an example, they may be used as a fuel in a fuel cell, in an engine as a NOx reducing agent or as a supplementary fuel or for any other consuming device. As another example, they may be used in a battery.

### Definitions

The following terms and expressions contained herein are defined as follows:
As used herein, the term "about" refers to a range of values from ± 10% of a specified value.
As used herein, the term "alkyl" refers to a straight-chain, or branched alkyl group having 1 to 10 carbon atoms, such as methyl, ethyl, propyl, isopropyl, butyl, isobutyl, sec-butyl, tert-butyl, pentyl, isoamyl, neopentyl, 1-ethylpropyl, 3-methylpentyl, 2,2-dimethylbutyl, 2,3-dimethylbutyl, hexyl, octyl.
As used herein, the term "cycloalkyl" refers to a saturated or partially saturated mono- or bicyclic alkyl ring system containing 3 to 10 carbon atoms. Preferred cycloalkyl groups include those containing 5 or 6 ring carbon atoms. Examples of cycloalkyl groups include such groups as cyclopropyl, cyclobutyl, cyclopentyl, cyclohexl, cycloheptyl, cyclooctyl, pinenyl, and adamantanyl.
As used herein, the term "aryl" refers to a substituted or unsubstituted, mono- or bicyclic hydrocarbon aromatic ring system having 6 to 12 ring carbon atoms. Examples include phenyl and naphthyl. Preferred aryl groups include unsubstituted or substituted phenyl and naphthyl groups. Included within the definition of "aryl" are fused ring systems, including, for example, ring systems in which an aromatic ring is fused to a cycloalkyl ring. Examples of such fused ring systems include, for example, indane, indene, and tetrahydronaphthalene.
As used herein, the term "arylalkyl" refers to an alkyl group that is substituted with an aryl group, wherein the alkyl and aryl groups are as defined above. Examples of arylalkyl groups include, but are not limited to, benzyl, bromobenzyl, phenethyl, benzhydryl, diphenylmethyl, triphenylmethyl, diphenylethyl, and naphthylmethyl.
As used herein, the term "heteroaryl" refers to an aromatic group containing 5 to 10 ring carbon atoms in which one or more ring carbon atoms are replaced by at least one hetero atom such as -O-, -N-, or -S-. Examples of heteroaryl groups include pyrrolyl, furanyl, thienyl, pyrazolyl, imidazolyl, thiazolyl, isothiazolyl, isoxazolyl, oxazolyl, oxathiolyl, oxadiazolyl, triazolyl, oxatriazolyl, furazanyl, tetrazolyl, pyridyl, pyrazinyl, pyrimidinyl, pyridazinyl, triazinyl, indolyl, isoindolyl, indazolyl, benzofuranyl, isobenzofuranyl, purinyl, quinazolinyl, quinolyl, isoquinolyl, benzoimidazolyl, benzothiazolyl, benzothiophenyl, thianaphthenyl, benzoxazolyl, benzisoxazolyl, cinnolinyl, phthalazinyl, naphthyridinyl, and quinoxalinyl. Included within the definition of "heteroaryl" are fused ring systems, including, for example, ring systems in which an aromatic ring is fused to a heterocycloalkyl ring. Examples of such fused ring systems include, for example, phthalamide, phthalic anhydride, indoline, isoindoline, tetrahydroisoquinoline, chroman, isochroman, chromene, and isochromene.
As used herein, the expression "as needed basis" refers to the ability to control the reactions conditions wherein the amount oh hydrogen is controlled.

### Experimental Section

All solvents were purified according to reported procedures, and reagents like fluoride salt source, PHMS phenylsilane or 1,4-disilabutane were used as commercially available.
In particular, PHMS was purchased from Sigma-Aldrich Company (References 81330 and 176206). It has an average molecular weight ranging from 240-3200 g mol⁻¹ (corresponding to 4 - 53 monomer units).
Phenylsilane or 1,4-disilabutane were purchased from Sigma -Aldrich company and ABCR company.

### Example 1: Production of hydrogen using PHMS

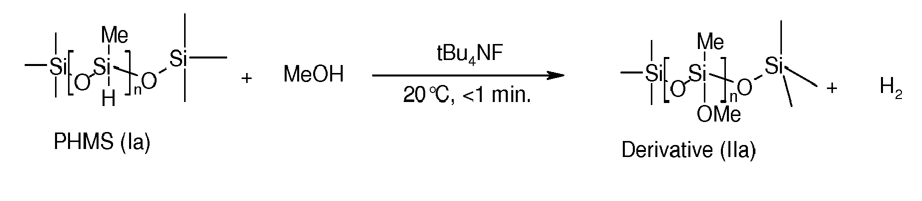

In a two necked round flask connected to an isobaric equipment consisting of a graduated tube connected to a separator funnel filled with a copper sulfate solution was placed at 20ºC under air 1 mL of PHMS (Ia) ( around 3.8 10⁻⁴ mole). A solution of 40 mg (1.5 10⁻⁴ mole) of tetrabutylammonium fluoride in anhydrous methanol (500 µL) was added with a siringue. Immediately, an exothermic reaction occurred with an hydrogen gas evolution representing a total volume of 380 mL (quantitative yield) in less than 10 seconds. The siloxane derivative by-product (IIa) was obtained as a white solid.

### Example 2: General production of hydrogen under various experimental conditions using PHMS.

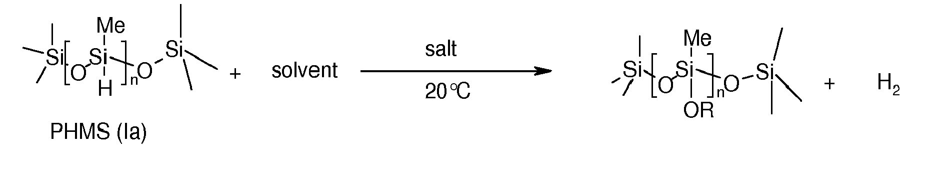

| Entry | PHMS | Salt | Solvent | Volume H₂ (mL) | Time (sec.) |
|---|---|---|---|---|---|
| 1 | 1 mL | Bu₄NF (160 mg) | - | 0 (20°C) | 15 |
| 2 | 1 mL | Bu₄NF (160 mg) | - | 40 (60°C) | 120 |
| 3 | 1 mL | Bu₄NF (160 mg) | Silicon oil | 30 | 120 |
| 4 | 1 mL | Bu₄NF (160 mg) | Ethanol (0.5 mL) | 250 | 10 |
| 5 | 1 mL | Bu₄NF (160 mg) | Acetone | 100 | 10 |
| 6 | 1 mL | Bu₄NF (80 mg) | Ethanol (0.5 mL) | 250 | 10 |
| 7 | 1 mL | Bu₄NF (40 mg) | Ethanol (0.5 mL) | 250 | 10 |
| 8 | 1 mL | Bu₄NF (20 mg) | Ethanol (0.25 mL) | 200 | 10 |
| 9 | 1 mL | Bu₄NF (40 mg) | Méthanol (0.50 mL) | 250 | 10 |
| 10 | 1 mL | Bu₄NF (40 mg) | Méthanol (1 mL) | 250 | 10 |
| 11 | 1 mL | KF (35 mg) | Méthanol (0.50 mL) | 380 | 10 |
| 12 | 1 mL | KF (35 mg) | Ethanol (0.5 mL) | 250 | 10 |

### Example 3: Production of hydrogen using phenylsilane Ib in the presence of methanol and of a catalytic amount of tetrabutylammonium fluoride

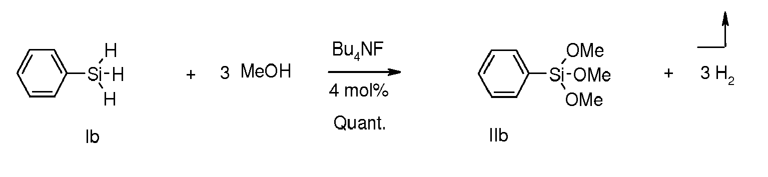

In a two-necked round flask connected to an isobaric equipment consisting of a graduated tube connected to a separator funnel filled with a copper sulfate solution was placed at 20ºC under air 400 mg (440 µL) of phenylsilane la (3.7 10⁻³ mole). A solution of 40 mg (1.5 10⁻⁴ mole) of tetrabutylammonium fluoride in anhydrous methanol (355 µL, 1.11 10⁻² mole) was added with a siringue. Immediately, an exothermic reaction occured with an hydrogen gas evolution representing a total volume of 260 mL (quantitative yield) in less than 10 seconds. The siloxane derivative by-product IIb was obtained as a clear oil in a quantitative yield.

### Example 4: Production of hydrogen using phenylsilane Ib in the presence of a stoichiometric amount of hydrated tetrabutylammonium fluoride

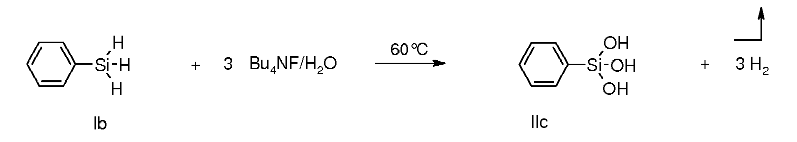

In a two-necked round flask connected to an isobaric equipment consisting of a graduated tube connected to a separator funnel filled with a copper sulfate solution was placed at 60ºC under air 3.13 g (1.2 10⁻² mole) of tetrabutylammonium fluoride. 400 mg (440 µL) of phenylsilane Ib (3.7 10⁻³ mole) was subsequently added with a siringue. Immediately, an exothermic reaction occurred with an hydrogen gas evolution representing a total volume of 260 mL in less than 10 seconds.

### Example 5: Production of hydrogen using phenylsilane Ib in the presence of a stoichiometric amount of ammonium fluoride

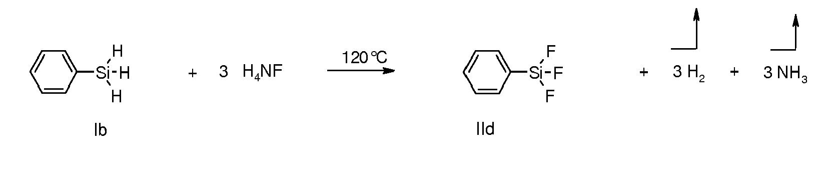

In a two necked round flask connected to an isobaric equipment consisting of a graduated tube connected to a separator funnel filled with a copper sulfate solution was placed at 120ºC under air 444 mg (1.2 10⁻² mole) of ammonium fluoride. 400 mg (440 µL) of phenylsilane Ib (3.7 10⁻³ mole) was subsequently added with a siringue. Immediately, an exothermic reaction occured with an hydrogen gas evolution representing a total volume of 260 mL in less than 10 seconds.

### Example 6: Production of hydrogen using 1,4-disilabutane Ib in the presence of methanol and of a catalytic amount of tetrabutylammonium fluoride

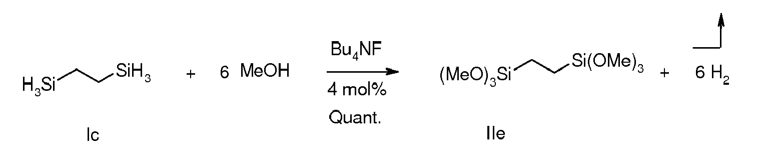

In a two-necked round flask connected to an isobaric equipment consisting of a graduated tube connected to a separator funnel filled with a copper sulfate solution was placed at 20ºC under air 175 mg (250 µL) of 1,4-disilabutane Ic (1.94 10⁻³ mole). A solution of 20 mg (7.7 10⁻⁵ mole) of tetrabutylammonium fluoride in anhydrous methanol (375 µL, 1.11 10⁻² mole) was added with a siringue. Immediately, an exothermic reaction occured with an hydrogen gas evolution representing a total volume of 270 mL in less than 10 seconds. The siloxane derivative by-product IIe was obtained as a clear oil in a quantitative yield.

### Example 7: Production of hydrogen using 1,4-disilabutane Ic in presence of a stoichiometric amount of hydrated tetrabutylammonium fluoride

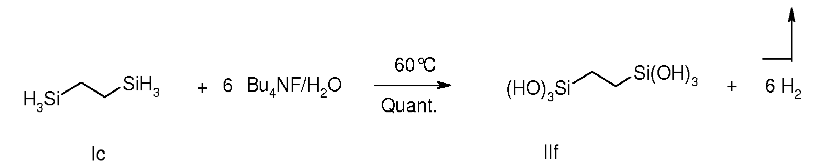

In a two-necked round flask connected to an isobaric equipment consisting of a graduated tube connected to a separator funnel filled with a copper sulfate solution was placed at 60ºC under air 3.13 g (1.2 10⁻² mole) of tetrabutylammonium fluoride. 175 mg (250 µL) of 1,4-disilabutane Ic (1.94 10⁻³ mole) was subsequently added with a siringue. Immediately, an exothermic reaction occured with an hydrogen gas evolution representing a total volume of 260 mL in less than 10 seconds.

### Example 8: Production of hydrogen using tetramethyldisiloxane Id in the presence of methanol and of a catalytic amount of tetrabutylammonium fluoride

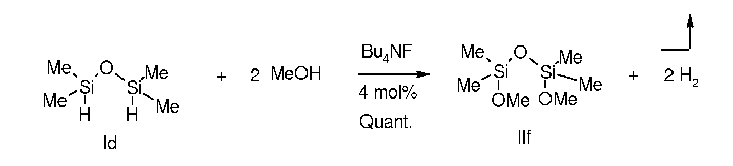

In a two-necked round flask connected to an isobaric equipment consisting of a graduated tube connected to a separator funnel filled with a copper sulfate solution was placed at 20ºC under air 1 g (1.33 mL) of tetramethyldisiloxane Id (7.46 10⁻³ mole). A solution of 8 mg (3.1 10⁻⁵ mole) of tetrabutylammonium fluoride in anhydrous methanol (480 µL, 1.49 10⁻² mole) was added with a siringue. Immediately, an exothermic reaction occured with an hydrogen gas evolution representing a total volume of 290 mL in less than 10 seconds.

### Example 9: Production of hydrogen using 1,1,3,3-tetramethyldisilazane le in the presence of methanol and of a catalytic amount of tetrabutylammonium fluoride

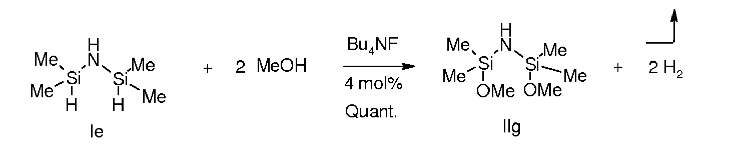

In a two-necked round flask connected to an isobaric equipment consisting of a graduated tube connected to a separator funnel filled with a copper sulfate solution was placed at 20ºC under air 1 g (1.33 mL) of 1,1,3,3-tetramethyldisilazane Ie (7.65 10⁻³ mole). A solution of 8 mg (3.1 10⁻⁵ mole) of tetrabutylammonium fluoride in anhydrous methanol (480 µL, 1.49 10⁻² mole) was added with a siringue. Immediately, an exothermic reaction occured with an hydrogen gas evolution representing a total volume of 320 mL in less than 10 seconds.

### Example 10: Production of hydrogen using tetramethyldisilane If in the presence of methanol and of a catalytic amount of tetrabutylammonium fluoride

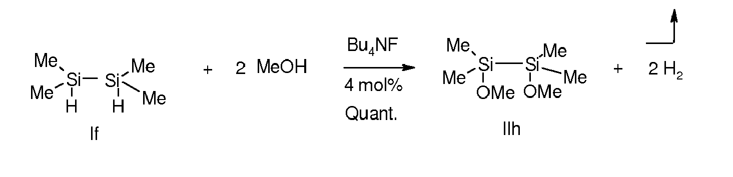

In a two-necked round flask connected to an isobaric equipment consisting of a graduated tube connected to a separator funnel filled with a copper sulfate solution was placed at 20ºC under air 177 mg (250 µL) of tetramethyldisilane If (1.50 10⁻³ mole). A solution of 15 mg (6 10⁻⁵ mole) of tetrabutylammonium fluoride in anhydrous methanol (96 µL, 3 10⁻³ mole) was added with a siringue. Immediately, an exothermic reaction occured with an hydrogen gas evolution representing a total volume of 70 mL in around 5 minutes.

### Example 11: Production of hydrogen using N,N-diethyl-1,1-dimethylsilylamine Ig in the presence of methanol and of a catalytic amount of tetrabutylammonium fluoride

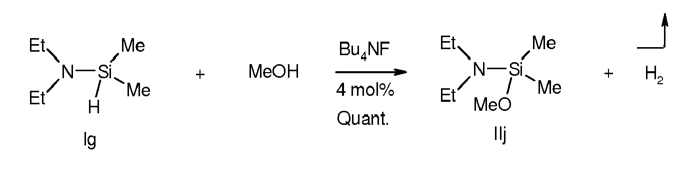

In a two-necked round flask connected to an isobaric equipment consisting of a graduated tube connected to a separator funnel filled with a copper sulfate solution was placed at 20ºC under air 195 mg (250 µL) of N,N-diethyl-1,1-dimethylsilylamine Ig (1.48 10⁻³ mole). A solution of 15 mg (6 10⁻⁵ mole) of tetrabutylammonium fluoride in anhydrous methanol (48 µL, 1.5 10⁻³ mole) was added with a siringue. Immediately, an exothermic reaction occured with an hydrogen gas evolution representing a total volume of 40 mL in less than 10 seconds.

### Example 12: General production of hydrogen under various experimental conditions.

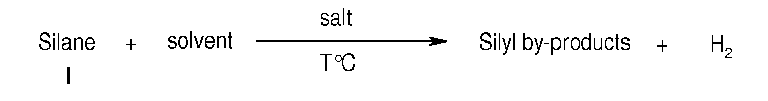

| Entry | Silane | Salt | Solvent | Volume H₂ (mL) | Time (sec.) |
|---|---|---|---|---|---|
| 1 | Ib (400 mg) | Bu₄NF/H₂O (4 mol%) | Methanol (355 µL) | 260 | 10 |
| 2 | Ib (400 mg) | Bu₄NF/H₂O (3.13 g) | - | 260 (60°C) | 10 |
| 3 | Ib (400 mg) | H₄NF (444 mg) | - | 260 (120°C) | 15 |
| 4 | Ib (400 mg) | Bu₄NF/H₂O (4 mol%) | 200 µL NaOH (1 M) | 230 | 15 |
| 5 | Ib (359 mg) | Me₄NF (4 mol%) | Methanol (355 µL) | 230 | |
| 6 | Ib (359 mg) | Me₄NF/4 H₂0 (4 mol%) | Methanol (355 µL) | 240 | |
| 7 | Ic (175 mg) | B_{U4}NF/H₂O (4 mol%) | Methanol (375 µL) | 270 | 10 |
| 8 | Ic (175 mg) | Bu₄NF/H₂O (3.13g) | - | 270 | 10 |
| 9 | Ic (175 mg) | Bu₄NF/H₂O (4 mol%) | 200 µL NaOH (1 M) | 90 | 15 |
| 10 | Ic (175 mg) | Bu₄NF/H₂O (4 mol%) | 200 µL KOH (30%) | 130 | 15 |

Unless otherwise mentioned, the experiments reported in the table hereabove were performed at room temperature, notably in the range of 20°C-30 °C.

## Claims

1. A method for producing hydrogen (H₂) comprising the steps consisting in :
a) reacting a compound (C) comprising one or more groups Si-H, with a fluoride ions source, thereby forming hydrogen and a by-product (C1) ; and
b) recovering the obtained hydrogen.

2. The method of claim 1, wherein the compound (C) comprises one or more monomer units of formula (A) : 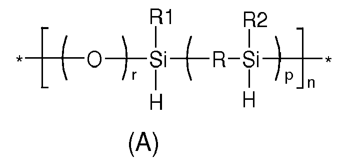 wherein :
R is a bond, C₁-C₆ alkylene, (C₁-C₄ alkylene)ₘ-Z-(C₁-C₄ alkylene)_{q} ;
Z is O, NR¹⁰, S(O)_{y}, CR¹⁰=CR¹⁰, C≡C, C₆-C₁₀ arylene, 5-10 membered heteroarylene, or C₃-C₆ cycloalkylene ;
R¹, R² are each independently selected from H, halogen, C₁-C₁₀ alkyl, C₃-C₁₀ cycloalkyl, C₆-C₁₂ aryl, aralkyl, 5 to 10-membered heteroaryl, OR³, NR⁴R⁵, SiR⁶R⁷R⁸, wherein said aryl groups are optionally substituted by one to three R⁹ groups ;
R³ is H, C₁-C₆ alkyl, C₆-C₁₀ aryl, aralkyl ;
R⁴, R⁵ are each independently selected from H, C₁-C₆ alkyl, C₆-C₁₀ aryl, aralkyl ;
R⁶, R⁷, R⁸ are each independently selected from H, OR³, C₁-C₆ alkyl, C₆-C₁₀ aryl, aralkyl ;
R⁹ is selected from halogen, C₁-C₁₀ alkyl, OR¹⁰, NO₂, NR¹¹R¹², CN, C(=O)R¹⁰, C(=O)OR¹⁰, S(=O)CH₃, wherein said alkyl group is optionally substituted by one or more halogen ;
R¹⁰ is H or C₁-C₃ alkyl;
R¹¹, R¹² are each independently selected from H, or C₁-C₁₀ alkyl;
m, q are 0 or 1 ;
y is 0, 1 or 2 ;
n, p are intengers each representing the number of repeating units, with
n being superior or equal than 1, and
p being 0 or 1 ;
r is 0 or 1 provided that p + r is 0 or 1 ;

3. The method of any of claims 1 or 2, wherein p is 0.

4. The method of claim 3, wherein r is 1.

5. The method of claim 4, wherein the monomer unit is of formula (Ia) :

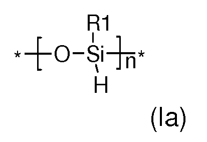

6. The method of claim 5, wherein the compound (C) is polymethylhydrosiloxane (PHMS).

7. The method of claim 3, wherein r is 0.

8. The method of claim 7, wherein the monomer unit is of formula (Ib) :

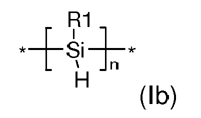

9. The method of claim 8, wherein the compound (C) comprising a monomer unit of formula (Ib) is PhSiH₃.

10. The method of claim 1 or 2, wherein p is 1 and r is 0.

11. The method of claim 10, wherein the monomer unit is of formula (Ic): 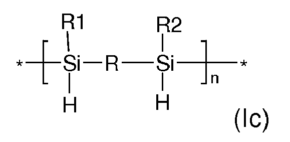 wherein R is C₁-C₆ alkylene.

12. The method of claim 11, wherein the compound (C) comprising a monomer unit of formula (Ic) is H₃Si(CH₂)₂SiH₃.

13. The method of any of claims 1 to 12, wherein the fluoride ions source is a fluoride salt selected from alkaline or alkaline earth metal salts, or ammonium, tetraalkylammonium, tetraarylammonium salts.

14. A by-product (C1) of formula (IIa) or (IIa') :

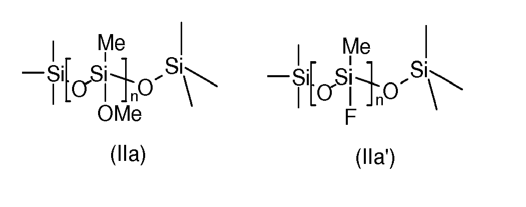

15. A method of recycling into CH₃Si(OH)₃ or a salt thereof, the by-product (C1) obtained from a method of claim 6, comprising contacting said by-product (C1) with a basic solution.

16. A method of recycling a by-product (C1) obtained from PhSiH₃ in alcohol as solvent according to the method of claims 9 into PhSiH₃, comprising contacting said by-product (C1) with a metal hydride.

17. A method of recycling a by-product (C1) obtained from H₃Si(CH₂)₂SiH₃ in alcohol as solvent according to the method of claims 12 into H₃Si(CH₂)₂SiH₃, comprising contacting said by-product (C1) with a metal hydride.

18. A device suitable for implementing the method of any of claims 1 to 13.

19. A composition comprising a compound (C) and a fluoride ions source as defined in any of claims 1 to 13.

20. A use of a composition as defined in any of claims 19 for producing hydrogen.
